# EUROPEAN PATENT SPECIFICATION

(11) **EP 4 621 693 B1**
(45) Date of publication and mention of the grant of the patent: **13.05.2026**
(21) Application number: 25164067.8
(22) Date of filing: 17.03.2025
(51) Int. Cl.: G06Q 30/0207, G06Q 30/0251

(54) **PERSONALIZED PROMOTION OFFER GENERATION BY UNDERSTANDING CUSTOMER BUYING INTENT TO MAXIMIZE RETURN ON INVESTMENT**
ERZEUGUNG EINES PERSONALISIERTEN WERBUNGSANGEBOTS DURCH VERSTÄNDNIS DER KUNDENKAUFABSICHT ZUR MAXIMIERUNG DER RÜCKKEHR ZU INVESTITIONEN
GÉNÉRATION D'OFFRES PROMOTIONNELLES PERSONNALISÉES PAR COMPRÉHENSION D'INTENTION D'ACHAT DE CLIENT POUR MAXIMISER LE RETOUR SUR L'INVESTISSEMENT

(30) Priority: 19.03.2024 IN 202421020543
(43) Date of publication of application: 24.09.2025
(73) Proprietor: Tata Consultancy Services Limited, Mumbai, Maharashtra 400 021 (IN)
(72) Inventor: CHAUDHURY, Abhishek Narayan, 600097 Chennai, Tamil Nadu (IN); KANDATH, Lakshmidevi, 600097 Chennai, Tamil Nadu (IN); RAMACHANDRASEKAR, Abhinaya, 600097 Chennai, Tamil Nadu (IN); MUSTAFA NAINA, Mahmood Zayeem, 600097 Chennai, Tamil Nadu (IN); SETH, Amit Kumar, 411057 Pune, Maharashtra (IN); MUNSHI, Syed Abdus Samy, 600097 Chennai, Tamil Nadu (IN)
(74) Representative: Goddar, Heinz J.

(56) References cited:
- US-A1- 2021 118 004
- US-A1- 2023 306 471

## Description

### CROSS-REFERENCE TO RELATED APPLICATIONS AND PRIORITY

The present application claims priority to Indian application no. 202421020543, filed on March 19, 2024.

### TECHNICAL FIELD

The embodiments herein generally relate to the field of data science for automated promotion offer generation and, more particularly, to a method and system for personalized promotion offer generation by understanding customer buying intent to maximize Return On Investment (ROI).

### BACKGROUND

Availability of consumer data, and rapid advancement data analytics techniques, has enabled entities, for example retailers to acquire insights on customers' shopping behavior and preferences and provide personalized services with the aim of generating more sales. Promotion offers is one of the strategies to boost the sales.

In the world of retail, the competition between different stores to promote their merchandise is very much necessary to increase their profit margin. In the objective to increase profit margin, one of the very important ways is to decrease the churn rate and increase conversions, which can be attained by promotion via gift cards and different offers. Even though there should be a positive correlation between offers and customer buying habits, it is also observed that even though companies spend 25% of their revenue on promotions, it results in a very little increase in conversions. The reason behind this is that for customers there are too many offers with less relevance and personalization resulting in poor ROI (return on investment). Promotions are mainly classified into two categories: 1. Segment based: Manual, rule-based promotions by tiers or segments resulting in lack of relevance to many. 2. Siloed: Channel centricity as there are different promotion/offer systems for different channels (Online, Store). This gap not only is affecting the retailers in terms of churn rate and yield margin but also customers are dissatisfied due to relevance. Generating only the relevant offers instead of allocating offers to customers is more critical to improve yield margin in turn ROI for the retailer.

The existing solutions consider the offer allocation mainly in terms of rules or loyalty programs. But the solutions are unable to bridge the gap between what a customer wants and what the customer can buy. Normal paradigms of customer segmentation is not effective in comparison to RFMbased segmentation, wherein RFM analysis is a model for segmenting customers based on three parameters that define their purchase habits: Recency (Number of days since last purchase), Frequency (Number of purchases for each customer), and Monetary value (Total value of all purchases for each customer).

Another recent work titled "Price discounts and personalized product assortments under multinomial logit choice model: A robust approach" analyzes customer behavior data. It jointly focusses on offer and an assortment of products. However, the offers or price discounts generated are non-personalized price discounts for each product and then upon the arrival of customers, the retailer offers a personalized assortment to each type of customer. The non-personalized price discount lacks the relevance to customer, , also has reduced effectiveness, and lower customer engagement. Based on this assortment, the customer then makes a purchase decision according to the Multinomial logit choice model. This approach focusses on the customer's want but may not ensure customer buying intent, thus rate of conversion of discount to sales is not guaranteed.

US patent application US2023/306471 is further background art.

### SUMMARY

Embodiments of the present disclosure present technological improvements as solutions to one or more of the above-mentioned technical problems recognized by the inventors in conventional systems.

For example, in one embodiment, a method for personalized promotion offer generation is provided. The method includes generating merged data from a product catalog and transaction data of an entity, wherein the product catalogue comprises a product id, a category, a subcategory, and an actual price of each of a plurality of products, and the transaction data comprises a customer id, the product id, the actual price, a promotion price, an order id and appended with a promotion redemption flag of each of a plurality of transacted products bought by a plurality of customers from among the plurality of products.

Further, the method comprises obtaining a promotion percentage based on a customer benefit received by one or more customers among the plurality of customers for one or more transacted products if the promotion redemption flag is set for the product id associated with the customer id, wherein the customer benefit is difference between the actual price and the promotion price in accordance with existing promotion offers for each of the plurality of transacted products.

Further, the method comprises generating a plurality of customer segments within the plurality of customers based on one of Recency, Monetary, Frequency (RFM) and Average Order Value (AOV) score derived for each of the plurality of customers by processing the transaction data.

Furthermore, the method comprises binning a plurality of promotion offers associated with the transaction data into a plurality of bins by grouping of the promotion percentage based on predefined bin ranges, wherein one or more promotion bins are associated with each customer segment within each category, and wherein an average actual price per category for each of a plurality of categories is determined from the product catalog.

Further, the method comprises predicting promotion offer redemption probability for each combination among a plurality of combinations of customer segment-promotion bin-category by applying a pretrained tree-based ensemble classifier on a first set of promotion associated features extracted by processing the plurality of customer segments, the plurality of promotion bins, and the plurality of categories.

Furthermore, the method comprises extracting a second set of promotion associated features derived from the predicted promotion offer redemption probability for each of the customer segments.

Further, the method comprises generating an optimal number of promotion offers for each combination of the plurality of combinations of customer segment-promotion bin-category that that maximize yield of the entity by processing the second set of promotion associated features by a linear programming model, under a plurality of constraints.

Further, the method comprises allocating the one or more promotion offers to each customer within each of the plurality of customer segments based on a (i) customer score computed for each customer using one of RFM or the AOV, and (ii) a category score representation number of unique categories products the customer has purchased, wherein the customer with lower RFM or AOV score is allocated higher promotion bins of promotion offers.

Further, allocating the one or more offers is based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

Furthermore, the method comprises generating gift cards based on percentage of the allocated promotion offers and a minimum spend requirement from the customer, and an expected AOV uplift set by the entity.

In another aspect, a system for personalized promotion offer generation is provided. The system comprises a memory storing instructions; one or more Input/Output (I/O) interfaces; and one or more hardware processors coupled to the memory via the one or more I/O interfaces, wherein the one or more hardware processors are configured by the instructions generate merged data from a product catalog and transaction data of an entity, wherein the product catalogue comprises a product id, a category, a subcategory, and an actual price of each of a plurality of products, and the transaction data comprises a customer id, the product id, the actual price, a promotion price, an order id and appended with a promotion redemption flag of each of a plurality of transacted products bought by a plurality of customers from among the plurality of products.

Further, the one or more hardware processors are configured to obtain a promotion percentage based on a customer benefit received by one or more customers among the plurality of customers for one or more transacted products if the promotion redemption flag is set for the product id associated with the customer id, wherein the customer benefit is difference between the actual price and the promotion price in accordance with existing promotion offers for each of the plurality of transacted products.

Further, the one or more hardware processors are configured to generate a plurality of customer segments within the plurality of customers based on one of Recency, Monetary, Frequency (RFM) and Average Order Value (AOV) score derived for each of the plurality of customers by processing the transaction data.

Furthermore, the one or more hardware processors are configured to bin a plurality of promotion offers associated with the transaction data into a plurality of bins by grouping of the promotion percentage based on predefined bin ranges, wherein one or more promotion bins are associated with each customer segment within each category, and wherein an average actual price per category for each of a plurality of categories is determined from the product catalog.

Further, the one or more hardware processors are configured to predict promotion offer redemption probability for each combination among a plurality of combinations of customer segment-promotion bin-category by applying a pretrained tree-based ensemble classifier on a first set of promotion associated features extracted by processing the plurality of customer segments, the plurality of promotion bins, and the plurality of categories.

Furthermore, the one or more hardware processors are configured to extract a second set of promotion associated features derived from the predicted promotion offer redemption probability for each of the customer segment.

Further, the one or more hardware processors are configured to generate an optimal number of promotion offers for each combination of the plurality of combinations of customer segment-promotion bin-category that that maximize yield of the entity by processing the second set of promotion associated features by a linear programming model, under a plurality of constraints.

Further, the one or more hardware processors are configured to allocate the one or more promotion offers to each customer within each of the plurality of customer segments based on a (i) customer score computed for each customer using one of RFM or the AOV, and (ii) a category score representation number of unique categories products the customer has purchased, wherein the customer with lower RFM or AOV score is allocated higher promotion bins of promotion offers.

Further, the one or more hardware processors are configured to allocate the one or more offers based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

Furthermore, the one or more hardware processors are configured to generate gift cards based on percentage of the allocated promotion offers and a minimum spend requirement from the customer, and an expected AOV uplift set by the entity.

In yet another aspect, there are provided one or more non-transitory machine-readable information storage mediums comprising one or more instructions, which when executed by one or more hardware processors causes a method for personalized promotion offer generation. The method includes generating merged data from a product catalog and transaction data of an entity, wherein the product catalogue comprises a product id, a category, a subcategory, and an actual price of each of a plurality of products, and the transaction data comprises a customer id, the product id, the actual price, a promotion price, an order id and appended with a promotion redemption flag of each of a plurality of transacted products bought by a plurality of customers from among the plurality of products.

Further, the method comprises obtaining a promotion percentage based on a customer benefit received by one or more customers among the plurality of customers for one or more transacted products if the promotion redemption flag is set for the product id associated with the customer id, wherein the customer benefit is difference between the actual price and the promotion price in accordance with existing promotion offers for each of the plurality of transacted products.

Further, the method comprises generating a plurality of customer segments within the plurality of customers based on one of Recency, Monetary, Frequency (RFM) and Average Order Value (AOV) score derived for each of the plurality of customers by processing the transaction data.

Furthermore, the method comprises binning a plurality of promotion offers associated with the transaction data into a plurality of bins by grouping of the promotion percentage based on predefined bin ranges, wherein one or more promotion bins are associated with each customer segment within each category, and wherein an average actual price per category for each of a plurality of categories is determined from the product catalog.

Further, the method comprises predicting promotion offer redemption probability for each combination among a plurality of combinations of customer segment-promotion bin-category by applying a pretrained tree-based ensemble classifier on a first set of promotion associated features extracted by processing the plurality of customer segments, the plurality of promotion bins, and the plurality of categories.

Furthermore, the method comprises extracting a second set of promotion associated features derived from the predicted promotion offer redemption probability for each of the customer segment.

Further, the method comprises generating an optimal number of promotion offers for each combination of the plurality of combinations of customer segment-promotion bin-category that that maximize yield of the entity by processing the second set of promotion associated features by a linear programming model, under a plurality of constraints.

Further, the method comprises allocating the one or more promotion offers to each customer within each of the plurality of customer segments based on a (i) customer score computed for each customer using one of RFM or the AOV, and (ii) a category score representation number of unique categories products the customer has purchased, wherein the customer with lower RFM or AOV score is allocated higher promotion bins of promotion offers.

Further, allocating the one or more offers is based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

Furthermore, the method comprises generating gift cards based on percentage of the allocated promotion offers and a minimum spend requirement from the customer, and an expected AOV uplift set by the entity.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system, for personalized promotion offer generation by understanding customer buying intent to maximize Return On Investment (ROI), in accordance with some embodiments of the present disclosure.
FIG. 1B illustrates an architectural and process overview of the system of FIG. 1A, in accordance with some embodiments of the present disclosure.
FIGS. 2A through 2B (collectively referred as FIG. 2) is a flow diagram illustrating a method for personalized promotion offer generation by understanding customer buying intent to maximize the ROI, using the system depicted in FIG. 1A and 1B, in accordance with some embodiments of the present disclosure.
FIG. 3 depicts the process for predicting promotion offer redemption probability per customer segment per category per promotion tier, by applying a pretrained tree based ensemble classifier of the system of FIG. 1 on a first set of promotion associated features, in accordance with some embodiments of the present disclosure.
FIG. 4 depicts the process for assigning optimal number of promotion offers per customer segment per category per promotion tier, via a linear programming model, by the system of FIG. 1 based on a second set of promotion associated features, in accordance with some embodiments of the present disclosure.
FIG. 5 depicts the process for gift card allocation, where the system of FIG. 1 sets how much customer needs to spend to get eligible for the promotion offer, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for personalized promotion offer generation by understanding customer buying intent to maximize Return On Investment (ROI). The method disclosed bridges the gap between what a customer wants and what the customer can buy and makes advances on the pre allocation stage of offers by generating at scale how many coupons can be allocated to enhance the yield margin of an entity, such as the retailer. The method generate offers based on what category retailers' focus to increase Average Order Value (AOV) across different customer segments. The method and system herein addresses customer segmentation using transaction data by using consumer habits, like purchasing decision, promotion redemption habits, their brand/category affinity, Recency, Frequency and Monetary scores (RFM). Recency (R) is a score indicating how recent is the customer. Frequency (F) is a score indicating the number of times each customer has purchased. Monetary (M) is a score indicating total Sales by each customer.

So along with personalized promotion offer allocation, or simply based on segments, the method generates personalized, optimized, and automated offers. The method utilizes product catalogue and transaction data to obtain product and associated customer details. Computes Recency, Monetary, Frequency (RFM) and Average Order Value (AOV) score on transaction data to create customer segments, wherein each customer fits into the segment according to demography, behavior, spending habits and promo purchase habits. The RFM/ AOV measures the behavior on how much order a certain customer places, how frequently and how recently, which captures the buying patterns i.e. demographics behavioral data for customer, which is then passed on to create customer groupings (segments) by creating RFM or AOV scores to do grouping or segments. A pretrained tree based ensemble classifier predicts promotion offer redemption probability for each customer segment. Further, a linear optimization model assigns an optimal number of promotion offers, to attain an increasing profit margin (maximum yield), thereby generating offers as per relevance (customer buying interest). A budget constraint is applied so that maximum revenue can be attained. The final per customer allocation of the offer is based on different rules of personalization as required from the industry. The eligibility of getting a gift card is computed by setting a threshold of what a customer should spend to get a gift card.

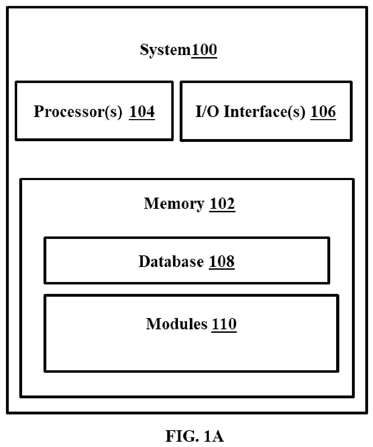

Referring now to the drawings, and more particularly to FIGS. 1A through 5, where similar reference characters denote corresponding features consistently throughout the figures, there are shown preferred embodiments, and these embodiments are described in the context of the following exemplary system and/or method.

FIG. 1A is a functional block diagram of a system, for personalized promotion offer generation by understanding customer buying intent to maximize Return On Investment (ROI), in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices such as user end devices (mobile devices). The system 100 can extend to user end (customer end) as lightweight software on an end consumer mobile device as an add-in with the mobile application of the entity (retailer) app or bundled with Loyalty Programs. The allocated offers and gift card notification is communicated to the customer on his/her mobile device.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110. The modules 110 includes a tree based ensemble classifier such as a Light Gradient Boosted Machine (LGBM),which is pretrained for predicting promotion offer redemption probability of a customer segment, a linear programming model, and the like.

The plurality of modules 110 include programs or coded instructions that supplement applications or functions performed by the system 100 for executing different steps involved in the process of personalized promotion offer generation, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. The database may include the product catalogue of the entity (the retailer), transaction data of the customer, RFM scores, AOV scores, customer scores and the like computed by the system 102.

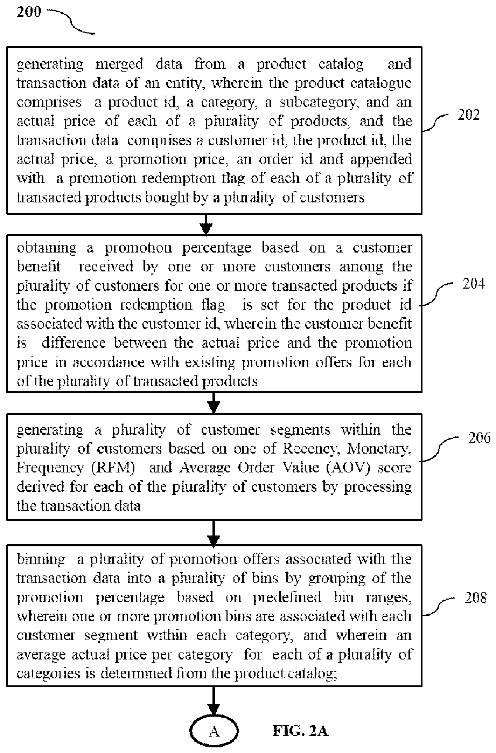

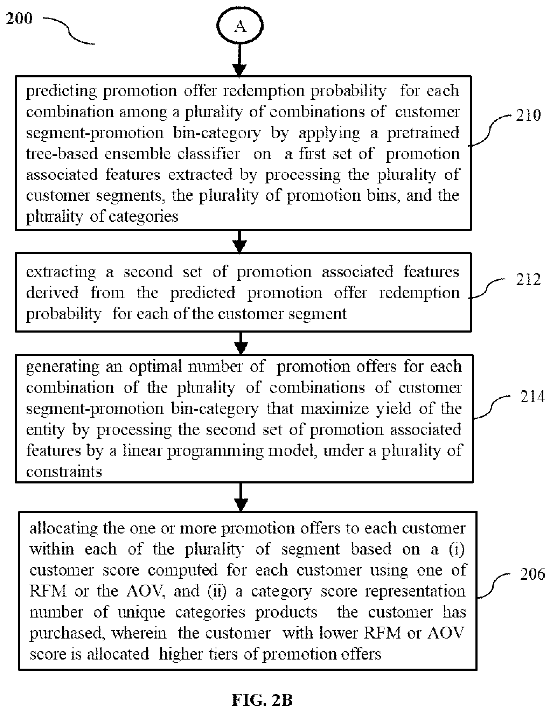

Although the data base 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 5.

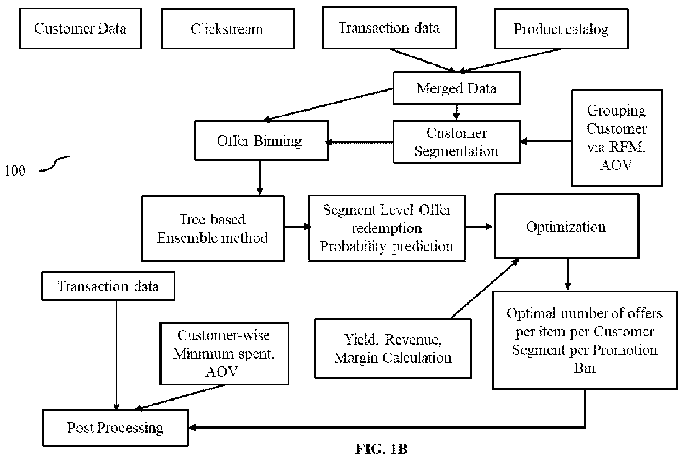

FIG. 1B illustrates an architectural and process overview of the system 100 of FIG. 1A, in accordance with some embodiments of the present disclosure and is understood in conjunction with steps of a method of FIG. 2

FIGS. 2A through 2B (collectively referred as FIG. 2) is a flow diagram illustrating a method for personalized promotion offer generation by understanding customer buying intent to maximize the ROI, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured to generate merged data from the product catalog ( also referred to as category data) and the transaction data of an entity, say a retailer. As depicted in Table 1 below, the product catalogue comprises a product id, a category, a subcategory, and an actual price of each of a plurality of products. As depicted in Table 2 below, the transaction data comprises a customer id, the product id, the actual price, a promotion price, and an order id. The transaction data (merged data) is further appended with a promotion redemption flag for each of a plurality of transacted products bought by a plurality of customers from among the plurality of products, wherein a set flag indicates promotion redeemed by the customer.

**Table 1**

| PRODUCT_ ID (or item ID) | Category | BRAND_ NAME | Sub Category | Item price/ actual price) |
|---|---|---|---|---|
| Product 1 | Category 1 | Brand 1 | Sub Category 1 | 750 |
| Product 2 | Category 1 | Brand 2 | Sub Category 2 | 275 |
| Product 3 | Category 2 | Brand 3 | Sub Category 3 | 494 |
| Product 4 | Category 3 | Brand 4 | Sub Category 4 | 15 |
| Product 5 | Category 1 | Brand 5 | Sub Category 5 | 250 |

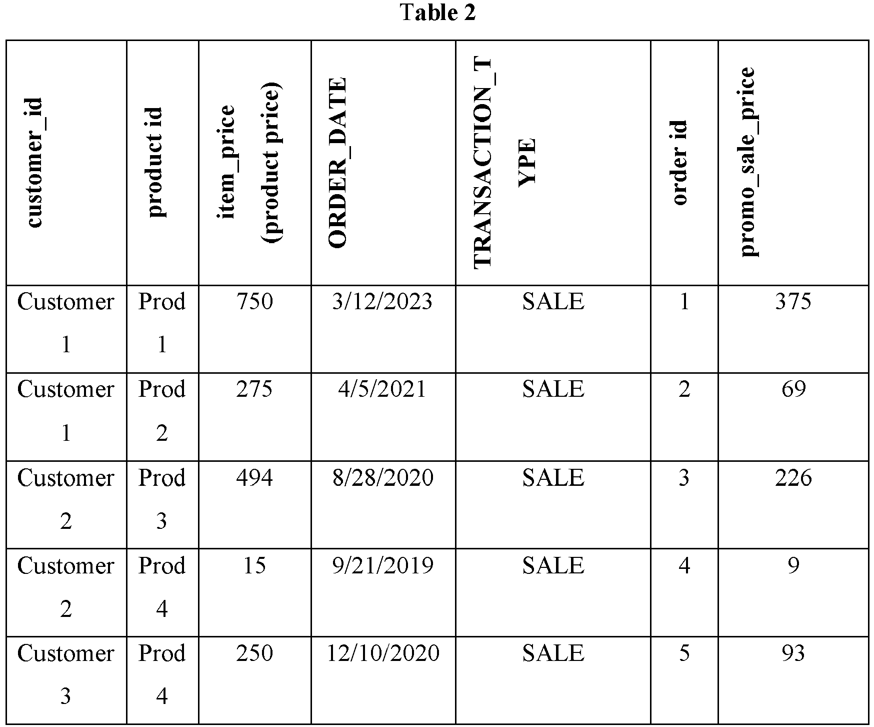

At step 204 of the method 200, the one or more hardware processors 104 are configured to obtain a promotion percentage based on a customer benefit received by one or more customers among the plurality of customers for one or more transacted products if the promotion redemption flag is set for the product id associated with the customer id. The customer benefit is the difference between the actual price and the promotion price in accordance with existing promotion offers for each of the plurality of transacted products. Table 3 below depicts the additional parameters appended to the transaction data that includes the promotion redemption flag ( promo purchase) and the promotion percentage.

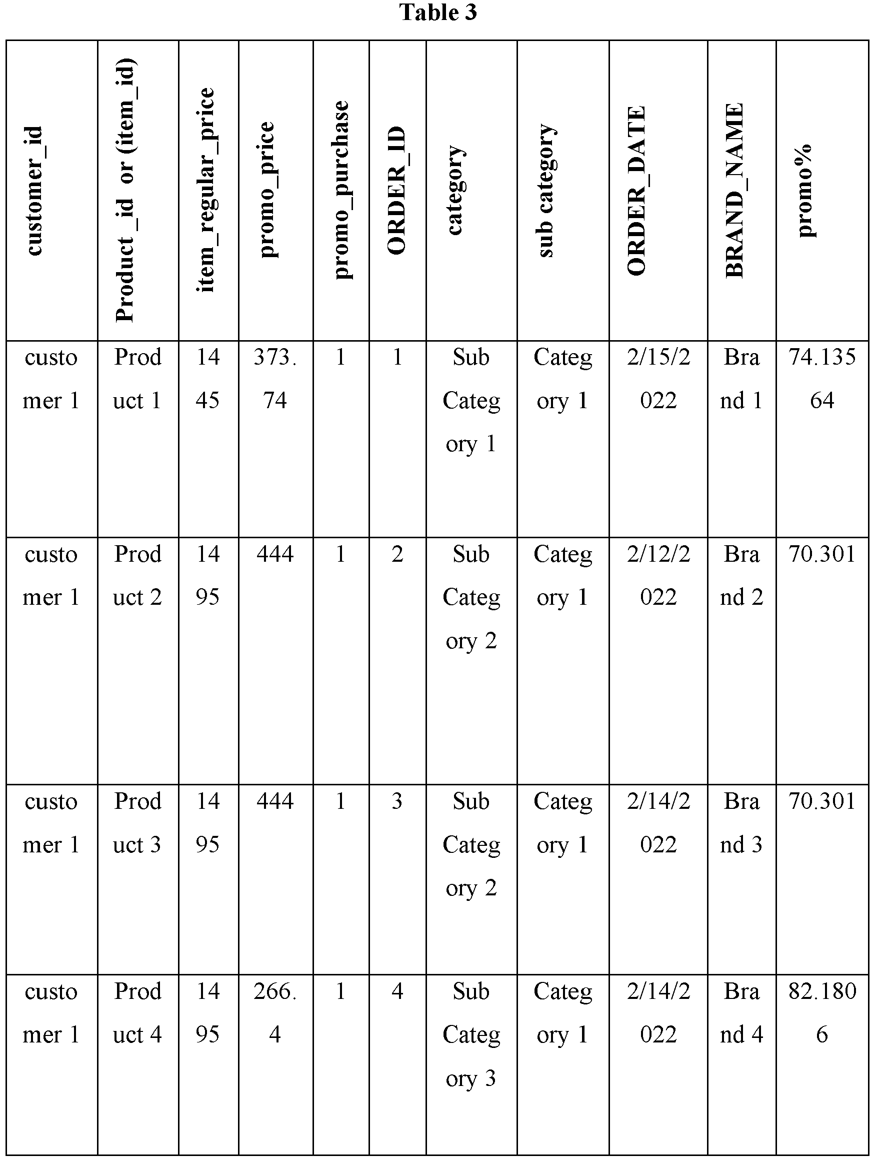

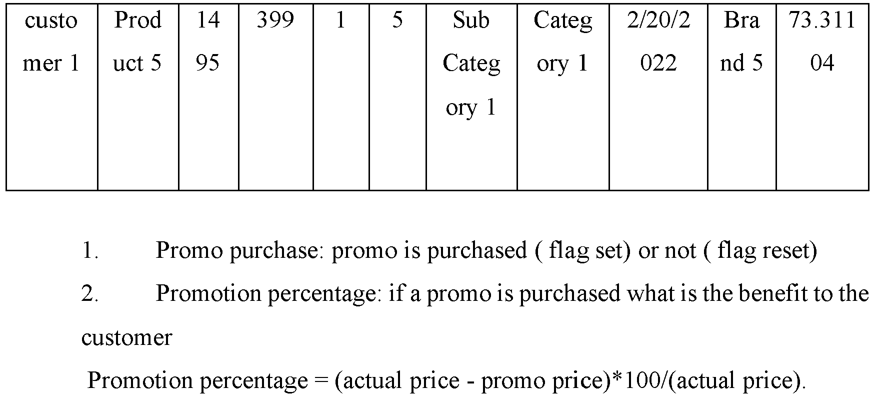

At step 206 of the method 200, the one or more hardware processors 104 are configured to generate a plurality of customer segments within the plurality of customers based on one of Recency, Monetary, Frequency (RFM) and Average Order Value (AOV) score derived for each of the plurality of customers by processing the transaction data of Table 3, that includes the promotion percentage and the promotion redemption flag. Table 4 indicates the customer segments generated based on RFM score.

**Table 4**

| customer_id | Customer segment | RFM_Score | R_Score | M_Score | F_Score |
|---|---|---|---|---|---|
| customer 1 | seg0 | 4 | 2 | 1 | 1 |
| Customer 2 | seg2 | 8 | 2 | 3 | 3 |
| Customer 3 | seg0 | 3 | 1 | 1 | 1 |
| Customer 4 | seg1 | 6 | 3 | 1 | 2 |
| Customer 5 | seg1 | 6 | 3 | 1 | 2 |

As is understood by person having ordinary skill in the art, the Recency (R) is computed based on the number of days past after the customer has made last purchase, the Frequency (F) is computed based on the number of orders made by the customer, the Monetary (M) is computed based on the total sales for the customer and the final RFM score is obtained by summing them. Similarly AOV is an ecommerce metric that measures the average total of every order placed with a merchant over a defined period of time. AOV is one of the most important metrics for online stores to be aware of, driving key business decisions such as advertising spend, store layout, and product pricing. AOV is revenue divided by number of orders.

At step 208 of the method 200, the one or more hardware processors 104 are configured to bin a plurality of promotion offers associated with the transaction data into a plurality of bins (depicted in Table 5) by grouping of the promotion percentage based on predefined bin ranges. The observed promotion percentage calculated from the data are observed as continuous float numbers. Thus some discrete values ( predefined bin ranges) suitable are defined to perform binning of the floats to those integers. The floats are converted to the nearest bin values.

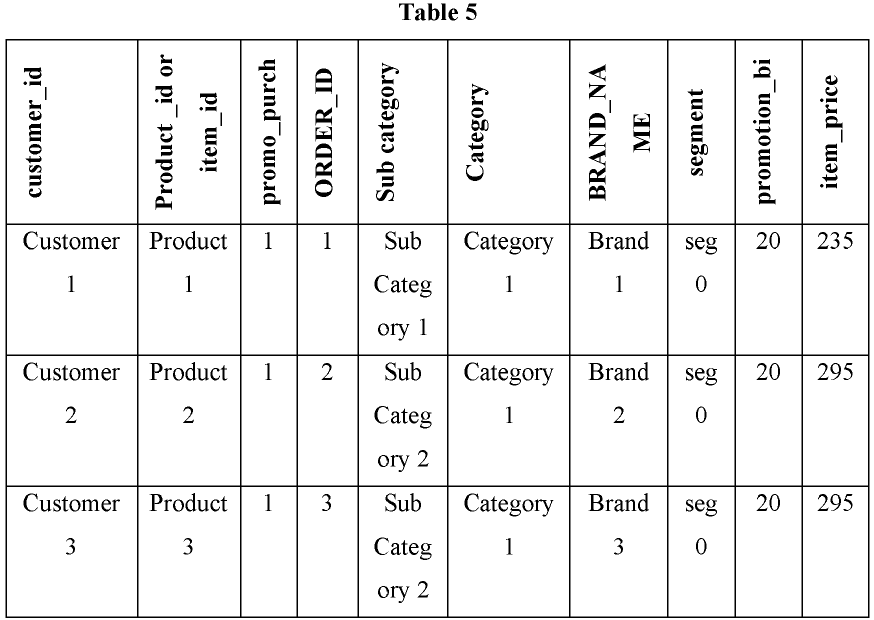

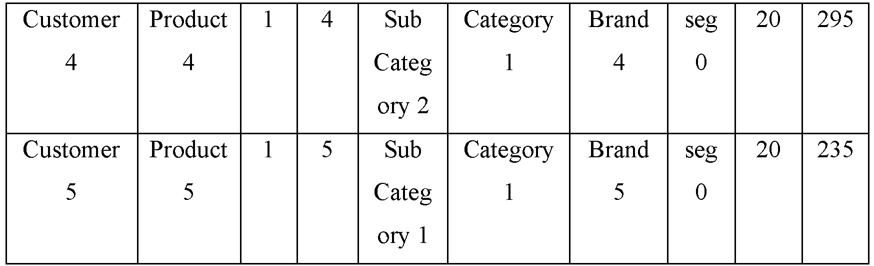

One or more promotion bins are associated with each customer segment within each category. Further, an average actual price per category for each of a plurality of categories is determined from the product catalog.

At step 210 of the method 200, the one or more hardware processors 104 are configured to predict promotion offer redemption probability for each combination among a plurality of combinations of customer segment-promotion bin-category by applying a pretrained tree based ensemble classifier (for example, LGBM model) on a first set of promotion associated features extracted by processing the plurality of customer segments, the plurality of promotion bins, and the plurality of categories.

### Generating first set of features

a. Input:
   i. Processed Transaction from Table 5
   ii. Category wise average prices
   iii. Customer and their corresponding segments
b. Generating all possible categories, customer segments, tier (also referred to as promotion bin or bin) combination (plurality of combinations of customer segment-promotion bin-category) to generate required features.
c. Output:
   i. Feature set:
      1. Product Category
      2. Customer segment ( also referred to as segment)
      3. Promotion Bin
      4. Promo Purchase -promo purchased or not (redemption flag set/reset)
      5. Category - segment total purchase: Total purchase (total purchase for a category and a customer segment)
      6. Category - segment promotion purchase: Total promo purchase (total promotion offer purchase of products for the category-customer segment )
      7. Price mean in a category (average actual price per category )
      8. No of purchases in a segment
      9. No of promo purchases in a segment
      10. Price mean in a segment
   ii. Number of customers in a segment: Customer segment distribution

### Generating first set of features (Continued)

a. Input: Processed Output from last stage (first set of features)
b. Output:
i. Final Feature Set ( depicted in Table 6A and 6B): Additionally following features are calculated and appended to the last set:
1. Price after discount (promotion price)
2. Number of promo purchases in a segment
3. Segment discount purchase
4. Max promo purchase

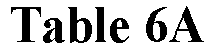

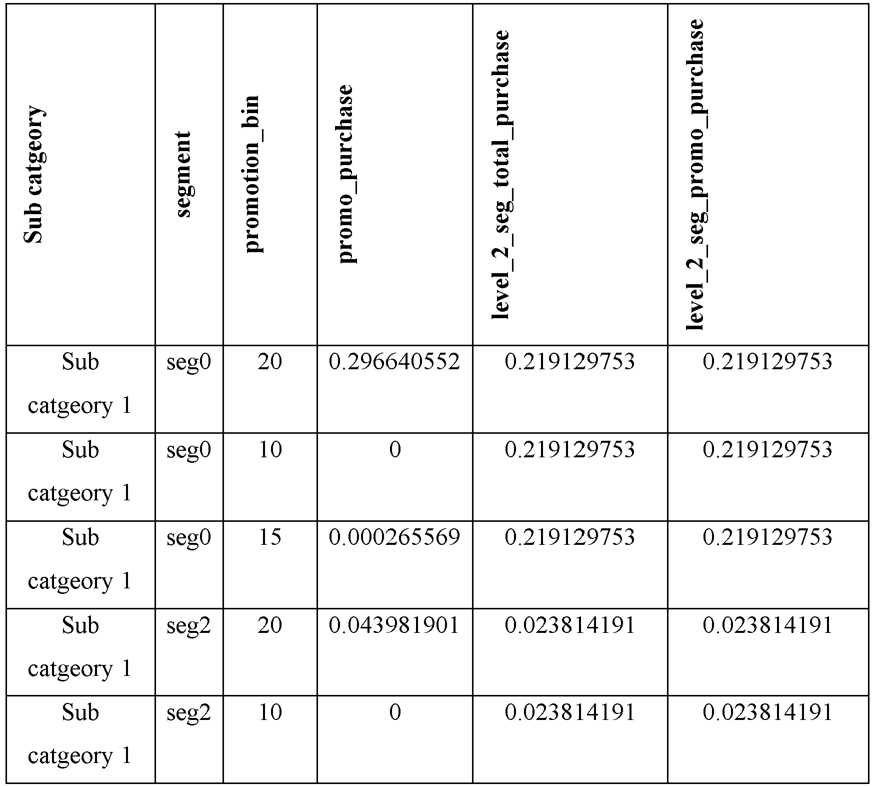

**Table 6B**

| price_after _discount | no_of_purcha ses_segment | no_of_promo_pur chases_segment | price_ mean | seg_disc_ purchase | max_prom o_purchase |
|---|---|---|---|---|---|
| 0.1035673 19 | 1 | 1 | 1 | 1 | 1 |
| 0.1170886 08 | 1 | 1 | 1 | 1 | 1 |
| 0.1103279 63 | 1 | 1 | 1 | 1 | 1 |
| 0.1035673 19 | 0 | 0 | 0 | 0 | 0 |
| 0.1170886 08 | 0 | 0 | 0 | 0 | 0 |

Final Feature Data from the last stage are used by the pretrained LGBM model for prediction. The LGBM model is trained using the same set of features derived from a training data and validated using a testing data.
Model Target variable: Promo purchase or not. 1 or 0, 1 if promo is used in purchase 0 otherwise

### Features:

a. Category - segment total purchase
b. Category - segment promo purchase
c. Price after discount
d. Number of purchases in a segment
e. Number of promo purchases in a segment
f. Price mean in a category
g. Segment discount purchase
h. Max promo purchase

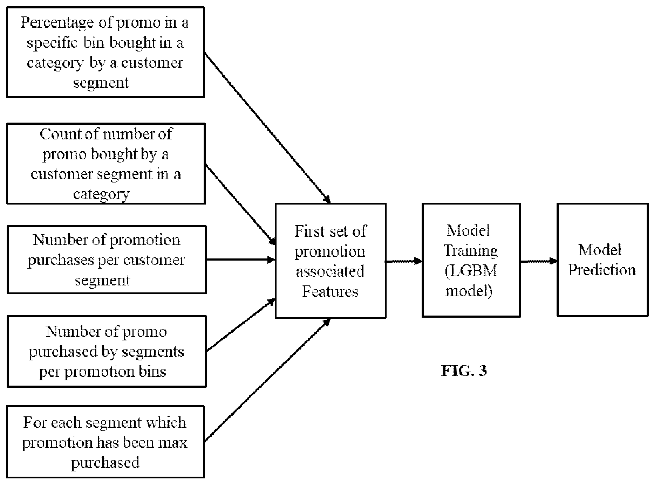

At step 212 of the method 200 and process flow of FIG. 3, the one or more hardware processors 104 are configured to extract a second set of promotion associated features derived from the predicted promotion offer redemption probability for each of the customer segment

### LGBM prediction:

a. Input: Data frame (first set of features) generated in the preprocessing stage.
b. The input data is being used along with the LightGBM (LGBM) model to generate the probability for all category - promotion bin - customer segment combination
c. Output:
i. Redemption Probability prediction by the LGBM model for all combinations as in step 212, is depicted in Table 7.

**Table 7**

| Offers (category_promotion bin_customer segment) | Probability |
|---|---|
| Shoes_10_seg0 | 0.1 |
| Pants_20_seg1 | 0.2 |
| Dress_15_seg2 | 0.3 |

### Inventory:

d. Input:
   i. Data frame (first set of features) generated in the preprocessing stage.
   ii. Inventory data: average cost/price, unit cost/price and product id of products
   iii. Redemption Probability output from last stage
e. Output:
   i. Second set of features (partial):
      1. For all combinations of Category, Promotion Bin/ Promotion tier and Customer Segment
         a. probability
         b. cost/price: Mean (average) cost of products
         c. Item regular price: Mean (average) price of products
         d. Loss of margin: Represents the loss that will be incurred upon offer redemption. Loss of margin, or the expected loss incurred due to the promotion is calculated as the difference between actual cost (price) and the expected cost (price) of the product after promotion. For instance, a buyer uses the promotion with probability p and pays the discounted cost or pays the whole price, so the expected cost becomes *cost -* (*cost*discount*p*) 100 which gives us the loss margin as (*cost*discount*p*) 100.
         e. Incremental revenue: Incremental revenue upon redemption of the coupon-Incremental revenue is the additional revenue generated by certain product and is calculated by number of products times the price. So, considering the discount (discount(d)), probability of purchase (p) of promo gives us the fraction of products sold at the price, *p* * (1 - *d*/100 ) * *price* for the single product.
         f. Incremental Margin: This is defined on the same lines as incremental revenue as the increase in profit margin for a specific single product given by p*((1-d/100)actual price-promo price)

### Calculating second set of features continued

Input:
   i. Output features from last stage (partial second set of features computed above (a through e)
Calculations:
   ii. Calculation of Incremental Yield, Yield margin Ratio and Number of Max offers
   iii. Calculation of max number of offers
Output:
   iv. Final second set of features (in Table 8A and 8B)): for each set of promotion bin- customer segment and category the following is calculated and append it to the existing partial second feature set:
   1. incremental yield: Yield is calculated as a weighted mean between revenue and profit margin.
   2. Yield margin ratio (YMR): yield margin ratio is described as the increase in yield per loss of margin
   3. No of Customers
   4. YMR sum : It is group sum of the YMR based on category and customer segment
   5. Constant: It is the ratio of the YMR and YMR sum
   6. Inverted constants : The Yield Margin Ratio (ymr) is inversely proportional to the max number of offers. Based on the YMR. A constant is calculated, which is the proportion of offers needs to be allocated, and inverted constant allocates the proportion in reverse order enforcing the inverse proportionality.
   7. No of max offers number of offers that can be allocated to a category, segment, promotion tier/bin combination: Number of Max offers:. The upper limit on number of offers per item category, segment and discount are calculated by multiplying inverted constant with the number of customers.

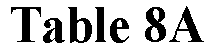

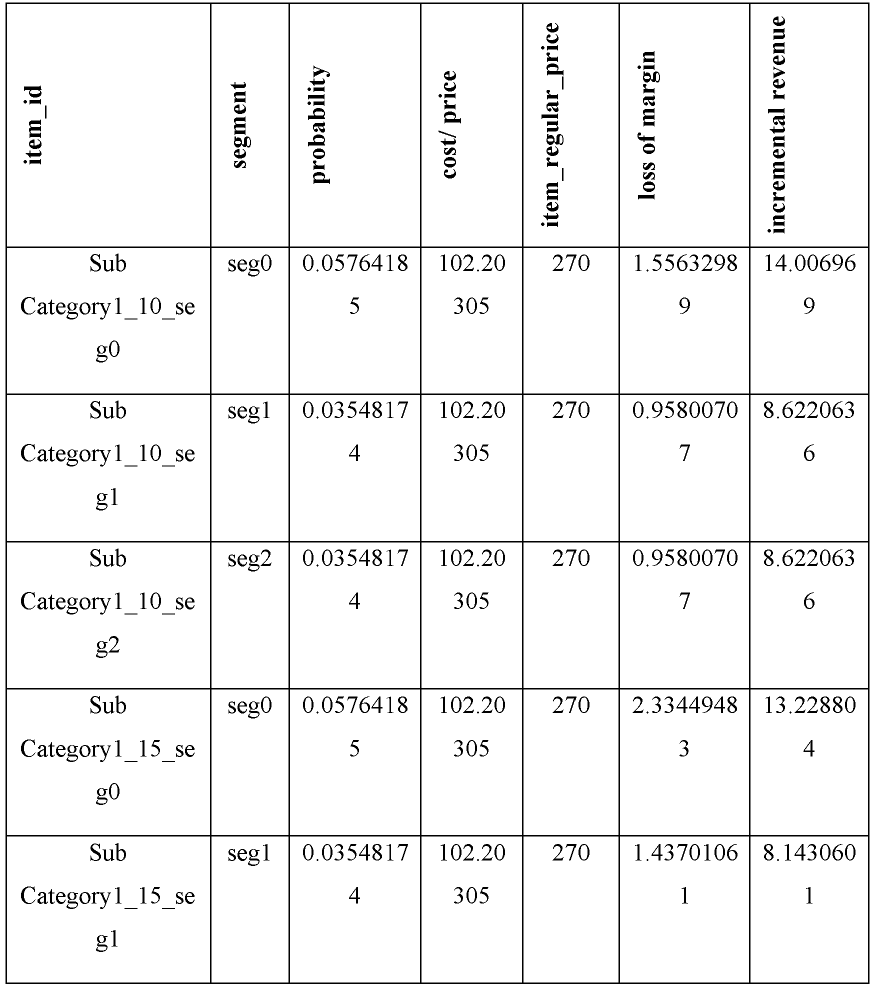

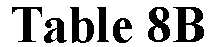

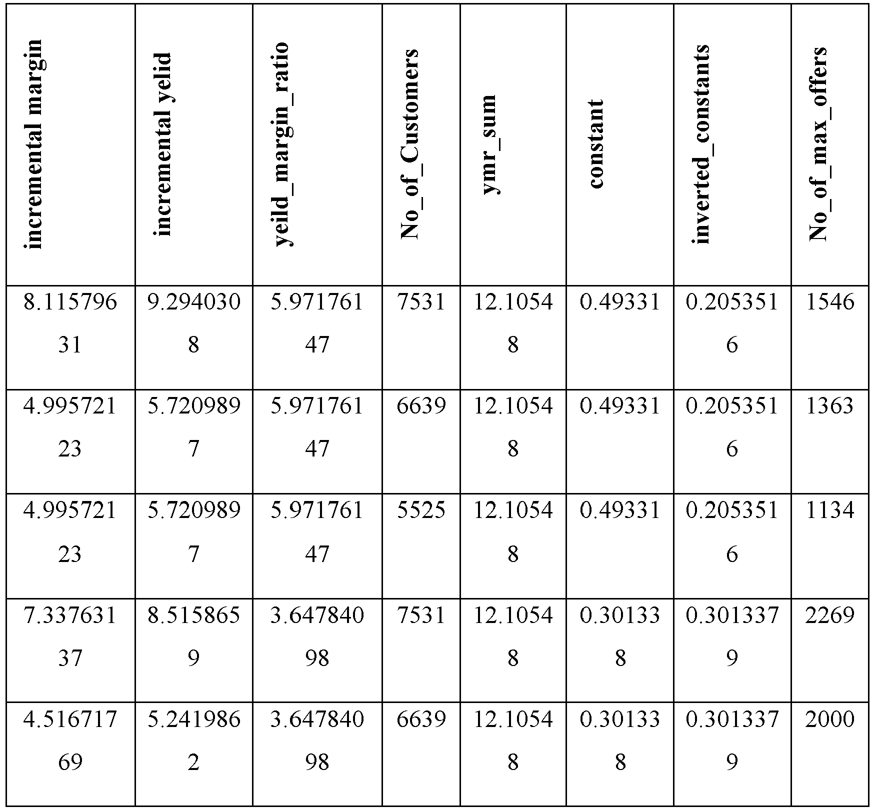

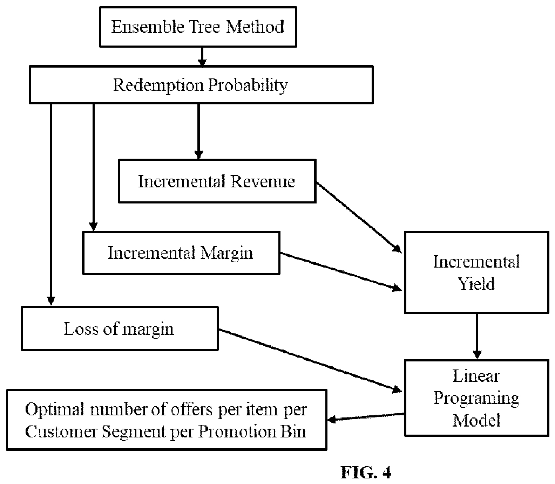

At step 214 of the method 200, the one or more hardware processors 104 are configured to generate optimal number of promotion offers for each combination of the plurality of combinations of 'customer segment-promotion bin-category' that are profitable (maximize yield for the entity), via the linear programming (LP) model, by processing the second set of promotion associated features under a plurality of constraints, as depicted in FIG. 4. The LGBM gives output of probability of redemption of all possible combinations of category, segment, promotion bins or promotion tiers. The probability is used to calculate the loss of margin, incremental margin, and incremental revenue. Thereafter the incremental yield obtained from it and other features create the second set of features
1. Input:
   a. Data frame with input from last stage
   b. Input value: budget input
2. Calculation Code:
   a. Objective: Maximizing yield
   b. Constraints:
      i. Loss of margin is within the budget input: Thus minimum loss margin is capped at the value given by the business user budget). This ensures the budget allocated by the retailer/merchant is not crossed, otherwise loss can cross the retailer budget, which is not recommended or intended.
      ii. The number of offers to be less than the number of customers in the segment. If there are more offers than the number of customers then there will be extra coupons which will not be used resulting in inefficient budget usage.
   c. Decision variables: How many offers can be allocated for a specific customer segment - category - promotion tier.
3. Output:
   a. Data frame consisting of second set of features with new feature appended 'optimum_no_of_offers' as depicted in Table 9A and 9B.

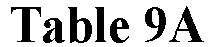

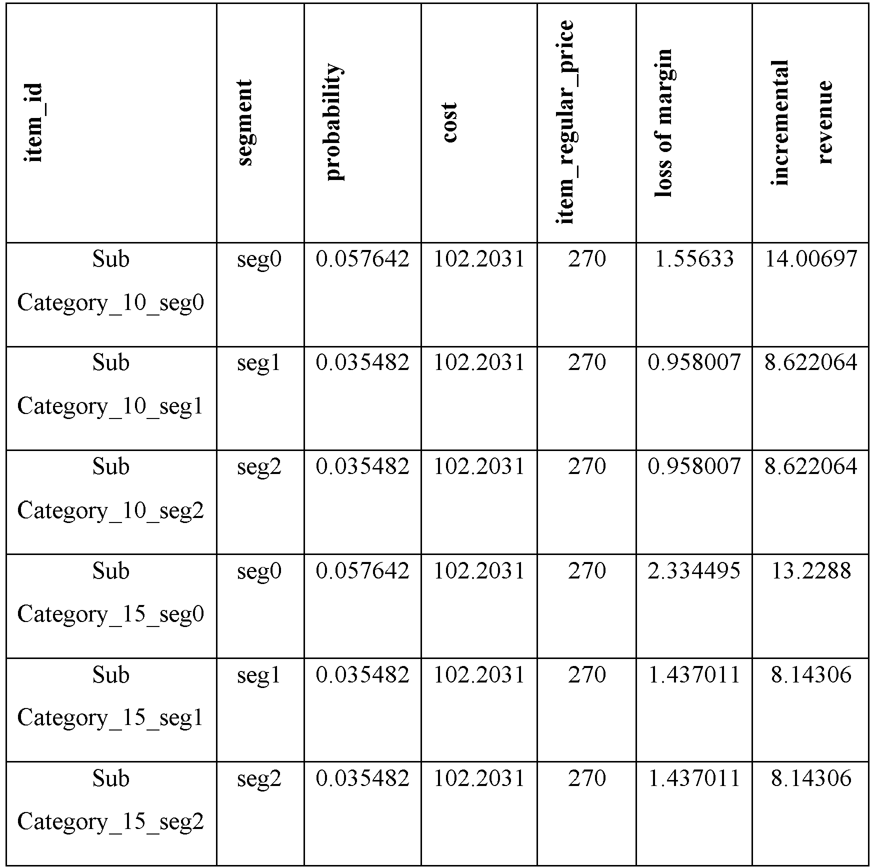

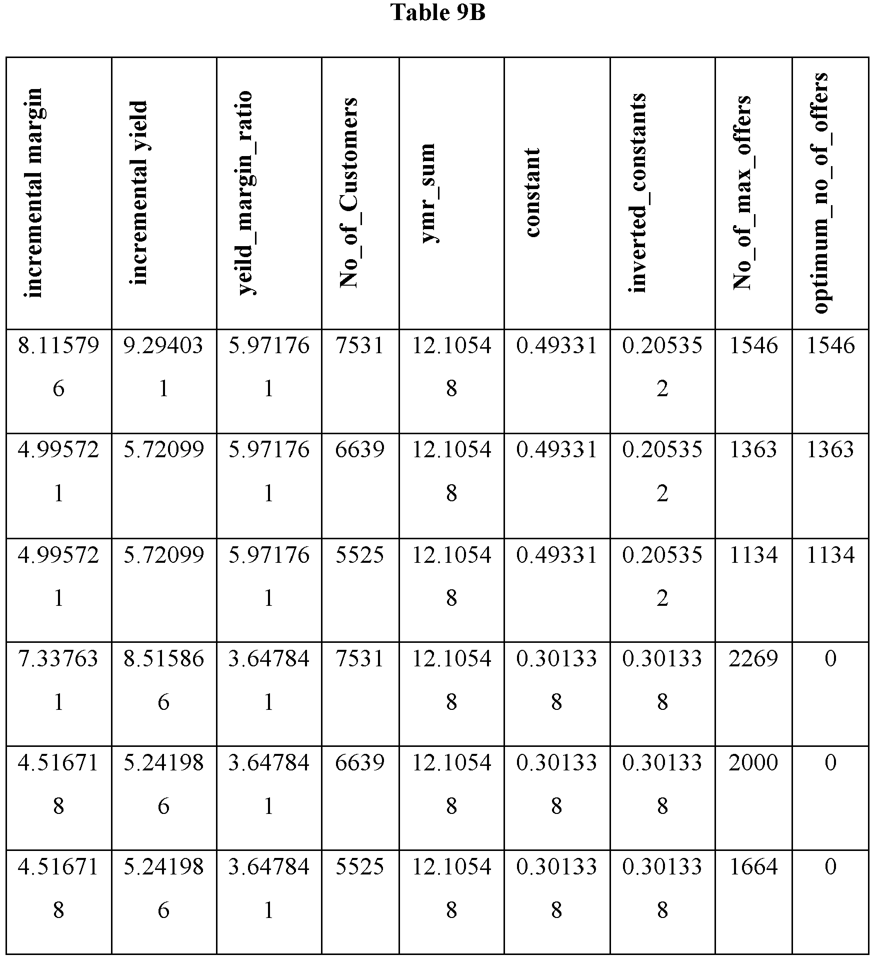

At step 216 of the method 200, the one or more hardware processors 104 are configured to allocate the one or more promotion offers to each customer within each of the plurality of customer segments based on a (i) customer score computed for each customer using one of RFM or the AOV, and (ii) a category score representation number of unique categories products the customer has purchased. The customer with a lower RFM or AOV score is allocated higher tiers of promotion offers.

Allocating the one or more offers is based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

Further, gift cards are generated based on percentage of the allocated promotion offers and a minimum spend requirement from the customer, and an expected AOV uplift set by the entity.

The table 9B depicts the fact that for a combination of customer segment-promotion bin- category, how much offers can be allocated to maximize the yield of the entity, keeping loss to the entity within a bound. Then the customer score is calculated using category and the RFM score and to be sorted a descending order to enforce the fact that the higher score customer gets a lower promotion tier/bin and the vice versa. Along with this the gift cards are created for the customer in accordance with using the following steps.
1. An user input of how much expected AOV uplift is needed is taken
2. The 'minimum spend' threshold is calculated as the offer percentage more than the expected AOV, so that the AOV of the customer can be increased, thereby increasing the profit margin. The number of tiers or bins are generated of the minimum of it based on the user requirement.
3. Finally the gift card value is calculated as the offer percentage multiplied with the expected AOV. The final output has been demonstrated in the Table 10.

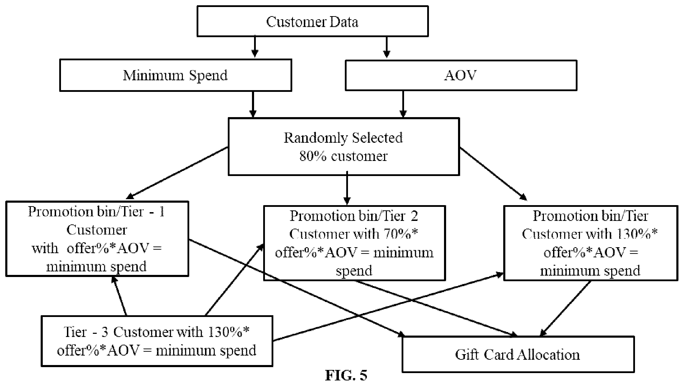

As depicted in FIG. 5... allocation is done based on percentage of the promotion offers. How much percentage of offer which customer will get. As use case this allocation of one or more promotion offers was enhanced it to cater to customer, by generating gift cards. For gift cards, obviously all customers may not respond. When promotion offers are communicated to customers via different channels onto the mobile device of the customer, some percentage of customers will notice the offers while for some customers it may go unnoticed. Thus, in one example implementation, 80% of customers are selected for gift cards (wherein the customer percentage is configurable).
1. Input:
a. Optimum number of offer per category per promotion tier per customer segment
b. Transaction data,
c. Customer segmentation

2. Calculations in Code
a. Allocation
   i. Considering all customers
   ii. Creating customer score, Customer Score = RFM score + category segment
   iii. Sort the customer data based on the values in the customer score in ascending order of the customer score
   iv. Looping over the customer set, if the customer has no transaction in that category, allocate offer from it
b. Calculation of minimum spend needed for gift card generation this will create three stages of minimum spend and which gift card to allocate to a customer for what spend

3. Final Output:
• Gift card allocation (as in Table 10)

**Table 10**

| **customer_id** | **Minimum_spend** | **discount** |
|---|---|---|
| 1 | 725 | 25 |
| 2 | 50 | 5 |
| 3 | 250 | 15 |
| 4 | 500 | 5 |
| 5 | 525 | 25 |
| 6 | 175 | 30 |
| 7 | 650 | 15 |
| 8 | 1000 | 5 |

• Redemption and projected revenue and loss depicted in Table 11.

**Table 11**

| **Redeem Rate** | **Expected Budget Utilization** | **Revenue** | **gift_card_budget** |
|---|---|---|---|
| 0.05 | 101035 | 878806.3 | 6000000 |
| 0.1 | 198923.8 | 1725322 | 6000000 |
| 0.15 | 297239.4 | 2603716 | 6000000 |
| 0.2 | 400240.6 | 3484881 | 6000000 |

• Aggregate data: The predictive analytics Table 12 shows count of distribution of customer across different minimum spend discount tiers (promotion bins).

**Table 12**

| **Minimum_spend** | **discount** | **start_date** | **end_date** | **customer_count** |
|---|---|---|---|---|
| 25 | 5 | 10/3/2023 0:00 | 31/03/23 23:59 | 515 |
| 50 | 5 | 10/3/2023 0:00 | 31/03/23 23:59 | 889 |
| 75 | 5 | 10/3/2023 0:00 | 31/03/23 23:59 | 305 |
| 75 | 15 | 10/3/2023 0:00 | 31/03/23 23:59 | 199 |
| 75 | 25 | 10/3/2023 0:00 | 31/03/23 23:59 | 79 |
| 75 | 30 | 10/3/2023 0:00 | 31/03/23 23:59 | 64 |
| 100 | 5 | 10/3/2023 0:00 | 31/03/23 23:59 | 360 |
| 100 | 15 | 10/3/2023 0:00 | 31/03/23 23:59 | 294 |

The method and system disclosed herein provides scalable automated generation of promotion offers using ML techniques, given customer transactions, product catalog and a budget value set by the retailer. The method enables optimized offers to allocate over high number of offer variants with differing offer tiers or promotion bins, category, and customer segments to customers so that invested budget results in maximizing yield and keeping the loss margin less than the budget. In a typical use case implementation, for a defined approved budget of 3.5Million for the gift cards received an expected return of over 8Million in the holiday period as a result of increase in sales. The method generated gift cards to ensure spend at the edge of their spending limit to get a gift card resulting in an overall increase in AOV.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for promotion offer generation, the method comprising:
generating (202), via one or more hardware processors, merged data from a product catalog and transaction data of an entity, wherein the product catalogue comprises a product id, a category, a subcategory, and an actual price of each of a plurality of products, and the transaction data comprises a customer id, the product id, the actual price, a promotion price, an order id, and wherein a promotion redemption flag for each of a plurality of transacted products bought by a plurality of customers from among the plurality of products is appended to the merged data;
obtaining (204), via one or more hardware processors, a promotion percentage based on a customer benefit received by one or more customers among the plurality of customers for one or more transacted products if the promotion redemption flag is set for the product id associated with the customer id, wherein the customer benefit is difference between the actual price and the promotion price in accordance with existing promotion offers for each of the plurality of transacted products;
generating (206), via one or more hardware processors, a plurality of customer segments within the plurality of customers based on one of (i) Recency, Monetary, Frequency (RFM), and (ii) Average Order Value (AOV) score derived for each of the plurality of customers by processing the transaction data;
binning (208), via one or more hardware processors, a plurality of promotion offers associated with the transaction data into a plurality of bins by grouping of the promotion percentage based on predefined bin ranges, wherein one or more promotion bins are associated with each customer segment within each category, and wherein an average actual price per category for each of a plurality of categories is determined from the product catalog;
predicting (210), via one or more hardware processors, promotion offer redemption probability for each combination among a plurality of combinations of customer segment-promotion bin-category by applying a pretrained tree-based ensemble classifier on a first set of promotion associated features extracted by processing the plurality of customer segments, the plurality of promotion bins, and the plurality of categories;
extracting (212), via one or more hardware processors, a second set of promotion associated features derived from the predicted promotion offer redemption probability for each of the customer segment;
generating (214), via one or more hardware processors, an optimal number of promotion offers for each combination of the plurality of combinations of customer segment-promotion bin-category that maximizes yield of the entity by processing the second set of promotion associated features by a linear programming model, under a plurality of constraints; and
allocating (216), via one or more hardware processors, the one or more promotion offers to each customer within each of the plurality of customer segments based on a (i) customer score computed for each customer using one of the RFM or the AOV, and (ii) a category score representation number of unique categories products the customer has purchased, wherein the customer with lower RFM or AOV score is allocated higher promotion bins of promotion offers.

2. The method of claim 1, wherein allocating the one or more offers is based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

3. The method of claim 1, comprises generating gift cards based on percentage of the allocated promotion offers and a minimum spend requirement from the customer, and an expected AOV uplift set by the entity.

4. The method of claim 1, wherein the first set of promotion associated features extracted by processing the plurality of customer segments, the plurality of promotion bins, and the plurality of categories comprises:
total purchase for a category and a customer segment, total promotion offer purchase of products for the category-customer segment , the promotion price, number of purchases of products in the customer segment, number of promotion offer purchases of the products in the customer segment, the average actual price in the customer segment, customer segment discount purchase, and maximum promotion offer purchase

5. The method of claim 1, wherein the second set of promotion associated features extracted by processing the plurality of customer segments, the plurality of promotion bins, and the plurality of categories comprises:
incremental margin, incremental yield margin ratio (ymr), number of customers, ymr sum, constant, inverted constants, number of maximum promotion offers, and number of promotion offers that can be allocated to a customer segment-promotion bin-category combination.

6. The method of claim 1, wherein the plurality of constraints comprise:
maximize yield based on budget constraints of the entity;
a loss margin, indicating expected loss incurred due to the difference between actual price and the promotion price promotion is capped at a predetermined value; and
number of promotion offers for each product in the customer segment not to exceed the number of customers in the customer segment.

7. A system (100) for promotion offer generation, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
generate merged data from a product catalog and transaction data of an entity, wherein the product catalogue comprises a product id, a category, a subcategory, and an actual price of each of a plurality of products, and the transaction data comprises a customer id, the product id, the actual price, a promotion price, an order id, and wherein a promotion redemption flag for each of a plurality of transacted products bought by a plurality of customers from among the plurality of products is appended to the merged data;
obtain a promotion percentage based on a customer benefit received by one or more customers among the plurality of customers for one or more transacted products if the promotion redemption flag is set for the product id associated with the customer id, wherein the customer benefit is difference between the actual price and the promotion price in accordance with existing promotion offers for each of the plurality of transacted products;
generate a plurality of customer segments within the plurality of customers based on one of Recency, Monetary, Frequency (RFM) and Average Order Value (AOV) score derived for each of the plurality of customers by processing the transaction data;
bin a plurality of promotion offers associated with the transaction data into a plurality of bins by grouping of the promotion percentage based on predefined bin ranges, wherein one or more promotion bins are associated with each customer segment within each category, and wherein an average actual price per category for each of a plurality of categories is determined from the product catalog;
predict promotion offer redemption probability for each combination among a plurality of combinations of customer segment-promotion bin-category by applying a pretrained tree-based ensemble classifier on a first set of promotion associated features extracted by processing the plurality of customer segments, the plurality of promotion bins, and the plurality of categories;
extract a second set of promotion associated features derived from the predicted promotion offer redemption probability for each of the customer segment;
generate an optimal number of promotion offers for each combination of the plurality of combinations of customer segment-promotion bin-category that that maximize yield of the entity by processing the second set of promotion associated features by a linear programming model, under a plurality of constraints; and
allocate the one or more promotion offers to each customer within each of the plurality of customer segments based on a (i) customer score computed for each customer using one of RFM or the AOV, and (ii) a category score representation number of unique categories products the customer has purchased, wherein the customer with lower RFM or AOV score is allocated higher promotion bins of promotion offers.

8. The system of claim 7, wherein allocating the one or more offers is based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

9. The system of claim 7, comprises generating gift cards based on percentage of the allocated promotion offers and a minimum spend requirement from the customer, and an expected AOV uplift set by the entity.

10. The system of claim 7, wherein the first set of promotion associated features extracted by processing the plurality of customer segments, the plurality of promotion bins, and the plurality of categories comprises:
total purchase for a category and a customer segment, total promotion offer purchase of products for the category-customer segment, the promotion price, number of purchases of products in the customer segment, number of promotion offer purchases of the products in the customer segment, the average actual price in the customer segment, customer segment discount purchase, and maximum promotion offer purchase.

11. The system of claim 7, wherein the second set of promotion associated features extracted by processing the plurality of customer segments, the plurality of promotion bins, and the plurality of categories comprises:
incremental margin, incremental yield margin ratio (ymr), number of customers, ymr sum, constant, inverted constants, number of maximum promotion offers, and number of promotion offers that can be allocated to a customer segment-promotion bin-category combination.

12. The system of claim 7, wherein the plurality of constraints comprise:
maximize yield based on budget constraints of the entity;
a loss margin, indicating expected loss incurred due to the difference between actual price and the promotion price promotion is capped at a predetermined value; and
number of promotion offers for each product in the customer segment not to exceed the number of customers in the customer segment.

13. One or more non-transitory machine-readable information storage mediums comprising one or more instructions which when executed by one or more hardware processors cause:
generating merged data from a product catalog and transaction data of an entity, wherein the product catalogue comprises a product id, a category, a subcategory, and an actual price of each of a plurality of products, and the transaction data comprises a customer id, the product id, the actual price, a promotion price, an order id, and wherein a promotion redemption flag for each of a plurality of transacted products bought by a plurality of customers from among the plurality of products is appended to the merged data;
obtaining a promotion percentage based on a customer benefit received by one or more customers among the plurality of customers for one or more transacted products if the promotion redemption flag is set for the product id associated with the customer id, wherein the customer benefit is difference between the actual price and the promotion price in accordance with existing promotion offers for each of the plurality of transacted products;
generating a plurality of customer segments within the plurality of customers based on one of (i) Recency, Monetary, Frequency (RFM), and (ii) Average Order Value (AOV) score derived for each of the plurality of customers by processing the transaction data;
binning a plurality of promotion offers associated with the transaction data into a plurality of bins by grouping of the promotion percentage based on predefined bin ranges, wherein one or more promotion bins are associated with each customer segment within each category, and wherein an average actual price per category for each of a plurality of categories is determined from the product catalog;
predicting promotion offer redemption probability for each combination among a plurality of combinations of customer segment-promotion bin-category by applying a pretrained tree-based ensemble classifier on a first set of promotion associated features extracted by processing the plurality of customer segments, the plurality of promotion bins, and the plurality of categories;
extracting a second set of promotion associated features derived from the predicted promotion offer redemption probability for each of the customer segment;
generating an optimal number of promotion offers for each combination of the plurality of combinations of customer segment-promotion bin-category that maximizes yield of the entity by processing the second set of promotion associated features by a linear programming model, under a plurality of constraints; and
allocating the one or more promotion offers to each customer within each of the plurality of customer segments based on a (i) customer score computed for each customer using one of the RFM or the AOV, and (ii) a category score representation number of unique categories products the customer has purchased, wherein the customer with lower RFM or AOV score is allocated higher promotion bins of promotion offers.

14. The one or more non-transitory machine-readable information storage mediums of claim 13, wherein allocating the one or more offers is based on one or more rules set by the entity, wherein the rules comprise (i) allocating a single promotion offer is to a customer from a collection of multiple eligible offers, wherein the single promotion offer is selected based on a highest inventory, and (ii) allocating one or more promotion offer based on a brand of the product the customer has transacted using category-based offers.

15. The one or more non-transitory machine-readable information storage mediums of claim 13, comprises generating gift cards based on percentage of the allocated promotion offers and a minimum spend requirement from the customer, and an expected AOV uplift set by the entity.

## Patentansprüche

1. Prozessorimplementiertes Verfahren (200) zur Erzeugung eines Promotionsangebots, wobei das Verfahren Folgendes umfasst:
Erzeugen (202), über einen oder mehrere Hardwareprozessoren, von zusammengeführten Daten aus einem Produktkatalog und Transaktionsdaten einer Entität, wobei der Produktkatalog eine Produkt-ID, eine Kategorie, eine Unterkategorie und einen tatsächlichen Preis von jedem einer Mehrzahl von Produkten umfasst und die Transaktionsdaten eine Kunden-ID, die Produkt-ID, den tatsächlichen Preis, einen Promotionspreis, eine Auftrags-ID umfassen und wobei ein Promotionsrücknahmeflag für jedes einer Mehrzahl von umgesetzten Produkten, die von einer Mehrzahl von Kunden aus der Mehrzahl von Produkten gekauft wurden, an die zusammengeführten Daten angehängt wird;
Erhalten (204), über einen oder mehrere Hardwareprozessoren, eines Promotionsprozentsatzes basierend auf einem Kundenvorteil, der von einem oder mehreren Kunden aus der Mehrzahl von Kunden für ein oder mehrere umgesetzte Produkte empfangen wird, wenn das Promotionsrücknahmeflag für die mit der Kunden-ID assoziierte Produkt-ID gesetzt ist, wobei der Kundenvorteil eine Differenz zwischen dem tatsächlichen Preis und dem Promotionspreis gemäß bestehenden Promotionsangeboten für jedes der Mehrzahl von umgesetzten Produkten ist;
Erzeugen (206), über einen oder mehrere Hardwareprozessoren, einer Mehrzahl von Kundensegmenten innerhalb der Mehrzahl von Kunden basierend auf einem von (i) Reccy, Monetary, Frequency (RFM) und (ii) Average Order Value (AOV) Score, die für jeden der Mehrzahl von Kunden durch Verarbeiten der Transaktionsdaten abgeleitet werden;
Binning (208), über einen oder mehrere Hardwareprozessoren, einer Mehrzahl von mit den Transaktionsdaten assoziierten Promotionsangeboten in eine Mehrzahl von Bins durch Gruppieren des Promotionsprozentsatzes basierend auf vordefinierten Bin-Bereichen, wobei ein oder mehrere Promotions-Bins mit jedem Kundensegment innerhalb jeder Kategorie assoziiert sind und wobei ein durchschnittlicher tatsächlicher Preis pro Kategorie für jede einer Mehrzahl von Kategorien aus dem Produktkatalog bestimmt wird;
Vorhersagen (210), über einen oder mehrere Hardwareprozessoren, einer Promotionsangebotsrücknahmewahrscheinlichkeit für jede Kombination aus einer Mehrzahl von Kombinationen von Kundensegment-Promotion-Bin-Kategorie durch Anwenden eines vortrainierten baumbasierten Ensemble-Klassifikators auf einen ersten Satz von promotionsassoziierten Merkmalen, die durch Verarbeiten der Mehrzahl von Kundensegmenten, der Mehrzahl von Promotions-Bins und der Mehrzahl von Kategorien extrahiert werden;
Extrahieren (212), über einen oder mehrere Hardwareprozessoren, eines zweiten Satzes von promotionsassoziierten Merkmalen, die aus der vorhergesagten Promotionsangebotsrücknahmewahrscheinlichkeit für jedes der Kundensegmente abgeleitet werden;
Erzeugen (214), über einen oder mehrere Hardwareprozessoren, einer optimalen Anzahl von Promotionsangeboten für jede Kombination der Mehrzahl von Kombinationen von Kundensegment-Promotion-Bin-Kategorie, die den Ertrag der Entität durch Verarbeiten des zweiten Satzes von promotionsassoziierten Merkmalen durch ein lineares Programmiermodell unter einer Mehrzahl von Einschränkungen maximiert; und
Zuweisen (216), über einen oder mehrere Hardwareprozessoren, des einen oder der mehreren Promotionsangebote zu jedem Kunden innerhalb jedes der Mehrzahl von Kundensegmenten basierend auf einem (i) Kundenscore, der für jeden Kunden unter Verwendung von einem von dem RFM oder dem AOV berechnet wird, und (ii) einer Kategorienscore-Darstellungsanzahl von Produkten eindeutiger Kategorien, die der Kunde gekauft hat, wobei dem Kunden mit niedrigerem RFM- oder AOV-Score höhere Promotions-Bins von Promotionsangeboten zugewiesen werden.

2. Verfahren nach Anspruch 1, wobei das Zuweisen des einen oder der mehreren Angebote auf einer oder mehreren Regeln basiert, die durch die Entität festgelegt werden, wobei die Regeln umfassen: (i) Zuweisen eines einzelnen Promotionsangebots zu einem Kunden aus einer Sammlung von mehreren in Frage kommenden Angeboten, wobei das einzelne Promotionsangebot basierend auf einem höchsten Bestand ausgewählt wird, und (ii) Zuweisen eines oder mehrerer Promotionsangebote basierend auf einer Marke des Produkts, das der Kunde unter Verwendung von kategoriebasierten Angeboten gehandelt hat.

3. Verfahren nach Anspruch 1, umfassend das Erzeugen von Geschenkkarten basierend auf dem Prozentsatz der zugewiesenen Promotionsangebote und einer Mindestausgabeanforderung von dem Kunden und einem erwarteten AOV-Auftrieb, der durch die Entität festgelegt wird.

4. Verfahren nach Anspruch 1, wobei der erste Satz von promotionsassoziierten Merkmalen, die durch Verarbeiten der Mehrzahl von Kundensegmenten, der Mehrzahl von Promotions-Bins und der Mehrzahl von Kategorien extrahiert werden, umfasst:
Gesamtkauf für eine Kategorie und ein Kundensegment, Gesamtpromotion-Angebotskauf von Produkten für das Kategorie-Kundensegment, den Promotionspreis, die Anzahl von Käufen von Produkten in dem Kundensegment, die Anzahl von Promotion-Angebotskäufen der Produkte in dem Kundensegment, den durchschnittlichen tatsächlichen Preis in dem Kundensegment, Kundensegmentrabattkauf und maximaler Promotion-Angebotskauf.

5. Verfahren nach Anspruch 1, wobei der zweite Satz von promotionsassoziierten Merkmalen, die durch Verarbeiten der Mehrzahl von Kundensegmenten, der Mehrzahl von Promotions-Bins und der Mehrzahl von Kategorien extrahiert werden, umfasst:
inkrementelle Marge, inkrementelles Ertragsmargenverhältnis (ymr), Anzahl von Kunden, ymr-Summe, Konstante, invertierte Konstanten, Anzahl von maximalen Promotionsangeboten und Anzahl von Promotionsangeboten, die einer Kundensegment-Promotion-Bin-Kategorie-Kombination zugewiesen werden können.

6. Verfahren nach Anspruch 1, wobei die Mehrzahl von Beschränkungen umfasst:
Maximieren des Ertrags basierend auf Budgetbeschränkungen der Entität;
eine Verlustmarge, die einen erwarteten Verlust angibt, der aufgrund der Differenz zwischen dem tatsächlichen Preis und der Promotionspreispromotion entstanden ist, wird auf einen vorbestimmten Wert begrenzt; und
Anzahl von Promotionsangeboten für jedes Produkt in dem Kundensegment, um die Anzahl von Kunden in dem Kundensegment nicht zu überschreiten.

7. System (100) zur Erzeugung eines Promotionsangebots, wobei das System (100) Folgendes umfasst:
einen Speicher (102), der Anweisungen speichert;
eine oder mehrere Eingabe/Ausgabe(E/A)-Schnittstellen (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:
Erzeugen von zusammengeführten Daten aus einem Produktkatalog und Transaktionsdaten einer Entität, wobei der Produktkatalog eine Produkt-ID, eine Kategorie, eine Unterkategorie und einen tatsächlichen Preis von jedem einer Mehrzahl von Produkten umfasst und die Transaktionsdaten eine Kunden-ID, die Produkt-ID, den tatsächlichen Preis, einen Promotionspreis, eine Auftrags-ID umfassen und wobei ein Promotionsrücknahmeflag für jedes einer Mehrzahl von umgesetzten Produkten, die von einer Mehrzahl von Kunden aus der Mehrzahl von Produkten gekauft wurden, an die zusammengeführten Daten angehängt wird;
Erhalten eines Promotionsprozentsatzes basierend auf einem Kundenvorteil, der von einem oder mehreren Kunden aus der Mehrzahl von Kunden für ein oder mehrere umgesetzte Produkte empfangen wird, wenn das Promotionsrücknahmeflag für die mit der Kunden-ID assoziierte Produkt-ID gesetzt ist, wobei der Kundenvorteil eine Differenz zwischen dem tatsächlichen Preis und dem Promotionspreis gemäß bestehenden Promotionsangeboten für jedes der Mehrzahl von umgesetzten Produkten ist;
Erzeugen einer Mehrzahl von Kundensegmenten innerhalb der Mehrzahl von Kunden basierend auf einem von Reccy, Monetary, Frequency (RFM) und Average Order Value (AOV) Score, die für jeden der Mehrzahl von Kunden durch Verarbeiten der Transaktionsdaten abgeleitet werden;
Binning einer Mehrzahl von mit den Transaktionsdaten assoziierten Promotionsangeboten in eine Mehrzahl von Bins durch Gruppieren des Promotionsprozentsatzes basierend auf vordefinierten Bin-Bereichen, wobei ein oder mehrere Promotions-Bins mit jedem Kundensegment innerhalb jeder Kategorie assoziiert sind und wobei ein durchschnittlicher tatsächlicher Preis pro Kategorie für jede einer Mehrzahl von Kategorien aus dem Produktkatalog bestimmt wird;
Vorhersagen einer Promotionsangebotsrücknahmewahrscheinlichkeit für jede Kombination aus einer Mehrzahl von Kombinationen von Kundensegment-Promotion-Bin-Kategorie durch Anwenden eines vortrainierten baumbasierten Ensemble-Klassifikators auf einen ersten Satz von promotionsassoziierten Merkmalen, die durch Verarbeiten der Mehrzahl von Kundensegmenten, der Mehrzahl von Promotions-Bins und der Mehrzahl von Kategorien extrahiert werden;
Extrahieren eines zweiten Satzes von promotionsassoziierten Merkmalen, die aus der vorhergesagten Promotionsangebotsrücknahmewahrscheinlichkeit für jedes der Kundensegmente abgeleitet werden;
Erzeugen einer optimalen Anzahl von Promotionsangeboten für jede Kombination der Mehrzahl von Kombinationen von Kundensegment-Promotion-Bin-Kategorie, die den Ertrag der Entität durch Verarbeiten des zweiten Satzes von promotionsassoziierten Merkmalen durch ein lineares Programmiermodell unter einer Mehrzahl von Einschränkungen maximieren; und
Zuweisen des einen oder der mehreren Promotionsangebote zu jedem Kunden innerhalb jedes der Mehrzahl von Kundensegmenten basierend auf einem (i) Kundenscore, der für jeden Kunden unter Verwendung von einem von dem RFM oder dem AOV berechnet wird, und (ii) einer Kategorienscore-Darstellungsanzahl von Produkten eindeutiger Kategorien, die der Kunde gekauft hat, wobei dem Kunden mit niedrigerem RFM- oder AOV-Score höhere Promotions-Bins von Promotionsangeboten zugewiesen werden.

8. System nach Anspruch 7, wobei das Zuweisen des einen oder der mehreren Angebote auf einer oder mehreren Regeln basiert, die durch die Entität festgelegt werden, wobei die Regeln umfassen: (i) Zuweisen eines einzelnen Promotionsangebots zu einem Kunden aus einer Sammlung von mehreren in Frage kommenden Angeboten, wobei das einzelne Promotionsangebot basierend auf einem höchsten Bestand ausgewählt wird, und (ii) Zuweisen eines oder mehrerer Promotionsangebote basierend auf einer Marke des Produkts, das der Kunde unter Verwendung von kategoriebasierten Angeboten gehandelt hat.

9. System nach Anspruch 7, umfassend das Erzeugen von Geschenkkarten basierend auf dem Prozentsatz der zugewiesenen Promotionsangebote und einer Mindestausgabeanforderung von dem Kunden und einem erwarteten AOV-Auftrieb, der durch die Entität festgelegt wird.

10. System nach Anspruch 7, wobei der erste Satz von promotionsassoziierten Merkmalen, die durch Verarbeiten der Mehrzahl von Kundensegmenten, der Mehrzahl von Promotions-Bins und der Mehrzahl von Kategorien extrahiert werden, umfasst:
Gesamtkauf für eine Kategorie und ein Kundensegment, Gesamtpromotion-Angebotskauf von Produkten für das Kategorie-Kundensegment, den Promotionspreis, die Anzahl von Käufen von Produkten in dem Kundensegment, die Anzahl von Promotion-Angebotskäufen der Produkte in dem Kundensegment, den durchschnittlichen tatsächlichen Preis in dem Kundensegment, Kundensegmentrabattkauf und maximaler Promotion-Angebotskauf.

11. System nach Anspruch 7, wobei der zweite Satz von promotionsassoziierten Merkmalen, die durch Verarbeiten der Mehrzahl von Kundensegmenten, der Mehrzahl von Promotions-Bins und der Mehrzahl von Kategorien extrahiert werden, umfasst:
inkrementelle Marge, inkrementelles Ertragsmargenverhältnis (ymr), Anzahl von Kunden, ymr-Summe, Konstante, invertierte Konstanten, Anzahl von maximalen Promotionsangeboten und Anzahl von Promotionsangeboten, die einer Kundensegment-Promotion-Bin-Kategorie-Kombination zugewiesen werden können.

12. System nach Anspruch 7, wobei die Mehrzahl von Beschränkungen umfasst:
Maximieren des Ertrags basierend auf Budgetbeschränkungen der Entität;
eine Verlustmarge, die einen erwarteten Verlust angibt, der aufgrund der Differenz zwischen dem tatsächlichen Preis und der Promotionspreispromotion entstanden ist, wird auf einen vorbestimmten Wert begrenzt; und
Anzahl von Promotionsangeboten für jedes Produkt in dem Kundensegment, um die Anzahl von Kunden in dem Kundensegment nicht zu überschreiten.

13. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Erzeugen von zusammengeführten Daten aus einem Produktkatalog und Transaktionsdaten einer Entität, wobei der Produktkatalog eine Produkt-ID, eine Kategorie, eine Unterkategorie und einen tatsächlichen Preis von jedem einer Mehrzahl von Produkten umfasst und die Transaktionsdaten eine Kunden-ID, die Produkt-ID, den tatsächlichen Preis, einen Promotionspreis, eine Auftrags-ID umfassen und wobei ein Promotionsrücknahmeflag für jedes einer Mehrzahl von umgesetzten Produkten, die von einer Mehrzahl von Kunden aus der Mehrzahl von Produkten gekauft wurden, an die zusammengeführten Daten angehängt wird;
Erhalten eines Promotionsprozentsatzes basierend auf einem Kundenvorteil, der von einem oder mehreren Kunden aus der Mehrzahl von Kunden für ein oder mehrere umgesetzte Produkte empfangen wird, wenn das Promotionsrücknahmeflag für die mit der Kunden-ID assoziierte Produkt-ID gesetzt ist, wobei der Kundenvorteil eine Differenz zwischen dem tatsächlichen Preis und dem Promotionspreis gemäß bestehenden Promotionsangeboten für jedes der Mehrzahl von umgesetzten Produkten ist;
Erzeugen einer Mehrzahl von Kundensegmenten innerhalb der Mehrzahl von Kunden basierend auf einem von (i) Reccy, Monetary, Frequency (RFM) und (ii) Average Order Value (AOV) Score, die für jeden der Mehrzahl von Kunden durch Verarbeiten der Transaktionsdaten abgeleitet werden;
Binning einer Mehrzahl von mit den Transaktionsdaten assoziierten Promotionsangeboten in eine Mehrzahl von Bins durch Gruppieren des Promotionsprozentsatzes basierend auf vordefinierten Bin-Bereichen, wobei ein oder mehrere Promotions-Bins mit jedem Kundensegment innerhalb jeder Kategorie assoziiert sind und wobei ein durchschnittlicher tatsächlicher Preis pro Kategorie für jede einer Mehrzahl von Kategorien aus dem Produktkatalog bestimmt wird;
Vorhersagen einer Promotionsangebotsrücknahmewahrscheinlichkeit für jede Kombination aus einer Mehrzahl von Kombinationen von Kundensegment-Promotion-Bin-Kategorie durch Anwenden eines vortrainierten baumbasierten Ensemble-Klassifikators auf einen ersten Satz von promotionsassoziierten Merkmalen, die durch Verarbeiten der Mehrzahl von Kundensegmenten, der Mehrzahl von Promotions-Bins und der Mehrzahl von Kategorien extrahiert werden;
Extrahieren eines zweiten Satzes von promotionsassoziierten Merkmalen, die aus der vorhergesagten Promotionsangebotsrücknahmewahrscheinlichkeit für jedes der Kundensegmente abgeleitet werden;
Erzeugen einer optimalen Anzahl von Promotionsangeboten für jede Kombination der Mehrzahl von Kombinationen von Kundensegment-Promotion-Bin-Kategorie, die den Ertrag der Entität durch Verarbeiten des zweiten Satzes von promotionsassoziierten Merkmalen durch ein lineares Programmiermodell unter einer Mehrzahl von Einschränkungen maximiert; und
Zuweisen des einen oder der mehreren Promotionsangebote zu jedem Kunden innerhalb jedes der Mehrzahl von Kundensegmenten basierend auf einem (i) Kundenscore, der für jeden Kunden unter Verwendung von einem von dem RFM oder dem AOV berechnet wird, und (ii) einer Kategorienscore-Darstellungsanzahl von Produkten eindeutiger Kategorien, die der Kunde gekauft hat, wobei dem Kunden mit niedrigerem RFM- oder AOV-Score höhere Promotions-Bins von Promotionsangeboten zugewiesen werden.

14. Ein oder mehrere nichtflüchtige maschinenlesbare Informationsspeichermedien nach Anspruch 13, wobei das Zuweisen des einen oder der mehreren Angebote auf einer oder mehreren Regeln basiert, die durch die Entität festgelegt werden, wobei die Regeln umfassen: (i) Zuweisen eines einzelnen Promotionsangebots zu einem Kunden aus einer Sammlung von mehreren in Frage kommenden Angeboten, wobei das einzelne Promotionsangebot basierend auf einem höchsten Bestand ausgewählt wird, und (ii) Zuweisen eines oder mehrerer Promotionsangebote basierend auf einer Marke des Produkts, das der Kunde unter Verwendung von kategoriebasierten Angeboten gehandelt hat.

15. Ein oder mehrere nichtflüchtige maschinenlesbare Informationsspeichermedien nach Anspruch 13, umfassend das Erzeugen von Geschenkkarten basierend auf dem Prozentsatz der zugewiesenen Promotionsangebote und einer Mindestausgabeanforderung von dem Kunden und einem erwarteten AOV-Auftrieb, der durch die Entität festgelegt wird.

## Revendications

1. Procédé mis en œuvre par processeur (200) pour la génération d'offres de promotion, le procédé comprenant :
la génération (202), via un ou plusieurs processeurs matériels, de données fusionnées à partir d'un catalogue de produits et de données de transaction d'une entité, dans lequel le catalogue de produits comprend un identifiant de produit, une catégorie, une sous-catégorie, et un prix réel de chacun d'une pluralité de produits, et les données de transaction comprennent un identifiant de client, l'identifiant de produit, le prix réel, un prix de promotion, un identifiant de commande, et dans lequel un indicateur d'utilisation de promotion pour chacun d'une pluralité de produits négociés achetés par une pluralité de clients parmi la pluralité de produits est annexé aux données fusionnées ;
l'obtention (204), via un ou plusieurs processeurs matériels, d'un pourcentage de promotion sur la base d'un avantage de client reçu par un ou plusieurs clients parmi la pluralité de clients pour un ou plusieurs produits négociés si l'indicateur d'utilisation de promotion est défini pour l'identifiant de produit associé à l'identifiant de client, dans lequel l'avantage de client est la différence entre le prix réel et le prix de promotion conformément aux offres de promotion existantes pour chacun de la pluralité de produits négociés ;
la génération (206), via un ou plusieurs processeurs matériels, d'une pluralité de segments de client à l'intérieur de la pluralité de clients sur la base de l'un parmi (i) la récence, la valeur monétaire et la fréquence (RFM), et (ii) le score de valeur moyenne de commande (AOV) dérivé pour chacun de la pluralité de clients en traitant les données de transaction ;
le compartimentage (208), via un ou plusieurs processeurs matériels, d'une pluralité d'offres de promotion associées aux données de transaction en une pluralité de compartiments en regroupant le pourcentage de promotion sur la base de plages de compartiments prédéfinies, dans lequel un ou plusieurs compartiments de promotion sont associés à chaque segment de clients à l'intérieur de chaque catégorie, et dans lequel un prix réel moyen par catégorie pour chacune d'une pluralité de catégories est déterminé à partir du catalogue de produits ;
la prédiction (210), via un ou plusieurs processeurs matériels, de la probabilité d'utilisation d'offre de promotion pour chaque combinaison parmi une pluralité de combinaisons de segment de clients-compartiment de promotion-catégorie en appliquant un classificateur d'ensemble à base d'arbre préentraîné sur un premier ensemble de caractéristiques associées à la promotion extraites en traitant la pluralité de segments de client, la pluralité de compartiments de promotion, et la pluralité de catégories ;
l'extraction (212), via un ou plusieurs processeurs matériels, d'un second ensemble de caractéristiques associées à la promotion dérivé de la probabilité d'utilisation d'offre de promotion prédite pour chacun du segment de clients ;
la génération (214), via un ou plusieurs processeurs matériels, d'un nombre optimal d'offres de promotion pour chaque combinaison de la pluralité de combinaisons de segment de clients-compartiment de promotion-catégorie qui maximise le rendement de l'entité en traitant le second ensemble de caractéristiques associées à la promotion par un modèle de programmation linéaire, sous une pluralité de contraintes ; et
l'attribution (216), via un ou plusieurs processeurs matériels, des une ou plusieurs offres de promotion à chaque client à l'intérieur de chacun de la pluralité de segments de client sur la base (i) d'un score de client calculé pour chaque client en utilisant l'un parmi la RFM ou l'AOV, et (ii) d'un nombre de représentation de score de catégorie de produits de catégories uniques que le client a achetés, dans lequel le client avec un score RFM ou AOV plus bas se voit attribuer des compartiments de promotion plus élevés d'offres de promotion.

2. Procédé selon la revendication 1, dans lequel l'attribution des une ou plusieurs offres est basée sur une ou plusieurs règles établies par l'entité, dans lequel les règles comprennent (i) l'attribution d'une offre de promotion unique à un client à partir d'une collection de multiples offres éligibles, dans lequel l'offre de promotion unique est sélectionnée sur la base d'un stock le plus élevé, et (ii) l'attribution d'une ou plusieurs offres de promotion sur la base d'une marque du produit que le client a négocié en utilisant des offres basées sur des catégories.

3. Procédé selon la revendication 1, comprenant la génération de cartes-cadeaux sur la base d'un pourcentage des offres de promotion attribuées et d'une exigence de dépense minimale du client, et d'une hausse d'AOV attendue établie par l'entité.

4. Procédé selon la revendication 1, dans lequel le premier ensemble de caractéristiques associées à la promotion extraites en traitant la pluralité de segments de client, la pluralité de compartiments de promotion, et la pluralité de catégories comprend :
l'achat total pour une catégorie et un segment de clients, l'achat total d'offre de promotion de produits pour le segment de clients de catégorie, le prix de promotion, le nombre d'achats de produits dans le segment de clients, le nombre d'achats d'offre de promotion des produits dans le segment de clients, le prix réel moyen dans le segment de clients, l'achat de remise de segment de clients, et l'achat d'offre de promotion maximum.

5. Procédé selon la revendication 1, dans lequel le second ensemble de caractéristiques associées à la promotion extraites en traitant la pluralité de segments de client, la pluralité de compartiments de promotion, et la pluralité de catégories comprend :
une marge incrémentielle, un rapport de marge de rendement incrémentiel (ymr), un nombre de clients, une somme de ymr, une constante, des constantes inversées, un nombre d'offres de promotion maximum, et un nombre d'offres de promotion qui peuvent être attribuées à une combinaison de segment de clients-compartiment de promotion-catégorie.

6. Procédé selon la revendication 1, dans lequel la pluralité de contraintes comprend :
la maximisation du rendement sur la base de contraintes budgétaires de l'entité ;
une marge de perte, indiquant la perte attendue encourue en raison de la différence entre le prix réel et le prix de promotion, est plafonnée à une valeur prédéterminée ; et
le nombre d'offres de promotion pour chaque produit dans le segment de clients ne doit pas dépasser le nombre de clients dans le segment de clients.

7. Système (100) pour la génération d'offres de promotion, le système (100) comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
générer des données fusionnées à partir d'un catalogue de produits et de données de transaction d'une entité, dans lequel le catalogue de produits comprend un identifiant de produit, une catégorie, une sous-catégorie, et un prix réel de chacun d'une pluralité de produits, et les données de transaction comprennent un identifiant de client, l'identifiant de produit, le prix réel, un prix de promotion, un identifiant de commande, et dans lequel un indicateur d'utilisation de promotion pour chacun d'une pluralité de produits négociés achetés par une pluralité de clients parmi la pluralité de produits est annexé aux données fusionnées ;
obtenir un pourcentage de promotion sur la base d'un avantage de client reçu par un ou plusieurs clients parmi la pluralité de clients pour un ou plusieurs produits négociés si l'indicateur d'utilisation de promotion est défini pour l'identifiant de produit associé à l'identifiant de client, dans lequel l'avantage de client est la différence entre le prix réel et le prix de promotion conformément aux offres de promotion existantes pour chacun de la pluralité de produits négociés ;
générer une pluralité de segments de client à l'intérieur de la pluralité de clients sur la base de l'un parmi la récence, la valeur monétaire et la fréquence (RFM) et le score de valeur moyenne de commande (AOV) dérivé pour chacun de la pluralité de clients en traitant les données de transaction ;
compartimenter une pluralité d'offres de promotion associées aux données de transaction en une pluralité de compartiments en regroupant le pourcentage de promotion sur la base de plages de compartiments prédéfinies, dans lequel un ou plusieurs compartiments de promotion sont associés à chaque segment de clients à l'intérieur de chaque catégorie, et dans lequel un prix réel moyen par catégorie pour chacune d'une pluralité de catégories est déterminé à partir du catalogue de produits ;
prédire la probabilité d'utilisation d'offre de promotion pour chaque combinaison parmi une pluralité de combinaisons de segment de clients-compartiment de promotion-catégorie en appliquant un classificateur d'ensemble à base d'arbre préentraîné sur un premier ensemble de caractéristiques associées à la promotion extraites en traitant la pluralité de segments de client, la pluralité de compartiments de promotion, et la pluralité de catégories ;
extraire un second ensemble de caractéristiques associées à la promotion dérivé de la probabilité d'utilisation d'offre de promotion prédite pour chacun du segment de clients ;
générer un nombre optimal d'offres de promotion pour chaque combinaison de la pluralité de combinaisons de segment de clients-compartiment de promotion-catégorie qui maximise le rendement de l'entité en traitant le second ensemble de caractéristiques associées à la promotion par un modèle de programmation linéaire, sous une pluralité de contraintes ; et
attribuer les une ou plusieurs offres de promotion à chaque client à l'intérieur de chacun de la pluralité de segments de client sur la base (i) d'un score de client calculé pour chaque client en utilisant l'un parmi la RFM ou l'AOV, et (ii) d'un nombre de représentation de score de catégorie de produits de catégories uniques que le client a achetés, dans lequel le client avec un score RFM ou AOV plus bas se voit attribuer des compartiments de promotion plus élevés d'offres de promotion.

8. Système selon la revendication 7, dans lequel l'attribution des une ou plusieurs offres est basée sur une ou plusieurs règles établies par l'entité, dans lequel les règles comprennent (i) l'attribution d'une offre de promotion unique à un client à partir d'une collection de multiples offres éligibles, dans lequel l'offre de promotion unique est sélectionnée sur la base d'un stock le plus élevé, et (ii) l'attribution d'une ou plusieurs offres de promotion sur la base d'une marque du produit que le client a négocié en utilisant des offres basées sur des catégories.

9. Système selon la revendication 7, comprenant la génération de cartes-cadeaux sur la base d'un pourcentage des offres de promotion attribuées et d'une exigence de dépense minimale du client, et d'une hausse d'AOV attendue établie par l'entité.

10. Système selon la revendication 7, dans lequel le premier ensemble de caractéristiques associées à la promotion extraites en traitant la pluralité de segments de client, la pluralité de compartiments de promotion, et la pluralité de catégories comprend :
l'achat total pour une catégorie et un segment de clients, l'achat total d'offre de promotion de produits pour le segment de clients de catégorie, le prix de promotion, le nombre d'achats de produits dans le segment de clients, le nombre d'achats d'offre de promotion des produits dans le segment de clients, le prix réel moyen dans le segment de clients, l'achat de remise de segment de clients, et l'achat d'offre de promotion maximum.

11. Système selon la revendication 7, dans lequel le second ensemble de caractéristiques associées à la promotion extraites en traitant la pluralité de segments de client, la pluralité de compartiments de promotion, et la pluralité de catégories comprend :
une marge incrémentielle, un rapport de marge de rendement incrémentiel (ymr), un nombre de clients, une somme de ymr, une constante, des constantes inversées, un nombre d'offres de promotion maximum, et un nombre d'offres de promotion qui peuvent être attribuées à une combinaison de segment de clients-compartiment de promotion-catégorie.

12. Système selon la revendication 7, dans lequel la pluralité de contraintes comprend :
la maximisation du rendement sur la base de contraintes budgétaires de l'entité ;
une marge de perte, indiquant la perte attendue encourue en raison de la différence entre le prix réel et le prix de promotion, est plafonnée à une valeur prédéterminée ; et
le nombre d'offres de promotion pour chaque produit dans le segment de clients ne doit pas dépasser le nombre de clients dans le segment de clients.

13. Un ou plusieurs supports de stockage d'informations lisibles par machine non transitoires comprenant une ou plusieurs instructions qui, lorsqu'elles sont exécutées par un ou plusieurs processeurs matériels, amènent :
la génération de données fusionnées à partir d'un catalogue de produits et de données de transaction d'une entité, dans lequel le catalogue de produits comprend un identifiant de produit, une catégorie, une sous-catégorie, et un prix réel de chacun d'une pluralité de produits, et les données de transaction comprennent un identifiant de client, l'identifiant de produit, le prix réel, un prix de promotion, un identifiant de commande, et dans lequel un indicateur d'utilisation de promotion pour chacun d'une pluralité de produits négociés achetés par une pluralité de clients parmi la pluralité de produits est annexé aux données fusionnées ;
l'obtention d'un pourcentage de promotion sur la base d'un avantage de client reçu par un ou plusieurs clients parmi la pluralité de clients pour un ou plusieurs produits négociés si l'indicateur d'utilisation de promotion est défini pour l'identifiant de produit associé à l'identifiant de client, dans lequel l'avantage de client est la différence entre le prix réel et le prix de promotion conformément aux offres de promotion existantes pour chacun de la pluralité de produits négociés ;
la génération d'une pluralité de segments de client à l'intérieur de la pluralité de clients sur la base de l'un parmi (i) la récence, la valeur monétaire et la fréquence (RFM), et (ii) le score de valeur moyenne de commande (AOV) dérivé pour chacun de la pluralité de clients en traitant les données de transaction ;
le compartimentage d'une pluralité d'offres de promotion associées aux données de transaction en une pluralité de compartiments en regroupant le pourcentage de promotion sur la base de plages de compartiments prédéfinies, dans lequel un ou plusieurs compartiments de promotion sont associés à chaque segment de clients à l'intérieur de chaque catégorie, et dans lequel un prix réel moyen par catégorie pour chacune d'une pluralité de catégories est déterminé à partir du catalogue de produits ;
la prédiction de la probabilité d'utilisation d'offre de promotion pour chaque combinaison parmi une pluralité de combinaisons de segment de clients-compartiment de promotion-catégorie en appliquant un classificateur d'ensemble à base d'arbre préentraîné sur un premier ensemble de caractéristiques associées à la promotion extraites en traitant la pluralité de segments de client, la pluralité de compartiments de promotion, et la pluralité de catégories ;
l'extraction d'un second ensemble de caractéristiques associées à la promotion dérivé de la probabilité d'utilisation d'offre de promotion prédite pour chacun du segment de clients ;
la génération d'un nombre optimal d'offres de promotion pour chaque combinaison de la pluralité de combinaisons de segment de clients-compartiment de promotion-catégorie qui maximise le rendement de l'entité en traitant le second ensemble de caractéristiques associées à la promotion par un modèle de programmation linéaire, sous une pluralité de contraintes ; et
l'attribution des une ou plusieurs offres de promotion à chaque client à l'intérieur de chacun de la pluralité de segments de client sur la base (i) d'un score de client calculé pour chaque client en utilisant l'un parmi la RFM ou l'AOV, et (ii) d'un nombre de représentation de score de catégorie de produits de catégories uniques que le client a achetés, dans lequel le client avec un score RFM ou AOV plus bas se voit attribuer des compartiments de promotion plus élevés d'offres de promotion.

14. Un ou plusieurs supports de stockage d'informations lisibles par machine non transitoires selon la revendication 13, dans lequel l'attribution des une ou plusieurs offres est basée sur une ou plusieurs règles établies par l'entité, dans lequel les règles comprennent (i) l'attribution d'une offre de promotion unique à un client à partir d'une collection de multiples offres éligibles, dans lequel l'offre de promotion unique est sélectionnée sur la base d'un stock le plus élevé, et (ii) l'attribution d'une ou plusieurs offres de promotion sur la base d'une marque du produit que le client a négocié en utilisant des offres basées sur des catégories.

15. Un ou plusieurs supports de stockage d'informations lisibles par machine non transitoires selon la revendication 13, comprenant la génération de cartes-cadeaux sur la base d'un pourcentage des offres de promotion attribuées et d'une exigence de dépense minimale du client, et d'une hausse d'AOV attendue établie par l'entité.
